# EUROPÄISCHE PATENTANMELDUNG

(11) **EP 2 628 763 A1**
(43) Veröffentlichungstag der Anmeldung: **21.08.2013**
(21) Anmeldenummer: 13152154.4
(22) Anmeldetag: 22.01.2013
(51) Int. Cl.: C08G 77/12, C08G 77/20, C08G 77/00, C08L 83/04

(54) **Verzweigte Polysiloxane und deren Verwendung**

(30) Priorität: 20.02.2012 DE 102012202521
(71) Anmelder: Evonik Goldschmidt GmbH, 45127 Essen (DE)
(72) Erfinder: Henning, Frauke, 45259 Essen (DE); Amajjahe, Sadik, 40591 Düsseldorf (DE); Linke, Ute, 40822 Mettmann (DE); Ferenz, Michael, 45147 Essen (DE); Knott, Wilfried, 45355 Essen (DE); Arning, Volker, 40477 Düsseldorf (DE); Brugger, Bastian Matthias, 46049 Oberhausen (DE); Lehmann, Kathrin, 51377 Leverkusen (DE)

(57) **Zusammenfassung**

Die Erfindung betrifft verzweigte Polysiloxane der Formel (I) Mₐ₁M^{H}ₐ₂M^{Vi}ₐ₃D_{b1}D^{H}_{b2}D^{Vi}_{b3}T_{c1}T^{H}_{c2}T^{Vi}_{c3}Q_{d}, ein Verfahren zur Herstellung von Polysiloxanen, insbesondere solchen der Formel (I), sowie deren Verwendung, insbesondere als oder zur Herstellung von härtbaren Einkomponenten-Silikonmassen.

## Beschreibung

### Gebiet der Erfindung

Die Erfindung betrifft verzweigte Polysiloxane der Formel (I) Mₐ₁M^{H}ₐ₂M^{Vi}ₐ₃D_{b1}D^{H}_{b2}D^{Vi}_{b3}T_{c1}T^{H}_{c2}T^{Vi}_{c3}Q_{d}, ein Verfahren zur Herstellung von Polysiloxanen, insbesondere solchen der Formel (I), sowie deren Verwendung, insbesondere als oder zur Herstellung von härtbaren Einkomponenten-Silikonmassen.

### Stand der Technik

Härtbare Silikonmassen finden breite Anwendung beispielsweise als Dichtstoffe und Beschichtungsmaterialien. Sehr verbreitet ist der Einsatz von zweikomponentigen Systemen bestehend aus einem vinylfunktionellen Polysiloxan und einem SiHfunktionellen Polysiloxan als Vernetzer.

Die Vernetzungsreaktion erfolgt durch edelmetallkatalysierte Hydrosilylierung, meist unter Einsatz von Platinkomplexen. So beschreibt beispielsweise die US 2004/0116640 A1 eine 2-Komponenten-Silikonharzzusammensetzung zur Herstellung von Leuchtdioden (LED), welche nach Zugabe von Platinkatalysatoren thermisch ausgehärtet wird. Die lichtinduzierte Hydrosilylierung - auch Photohydrosilylierung genannt - ist eine weitere Form dieser Vernetzungsmethode und ist in einer Vielzahl von Patenten beschrieben: DE 069019058 T2, DE 069122625 T2, US 6127446, WO 2006055456 A1, JP 2010047646 A1 oder WO 2009092762 A1. Die US 2007/0141739 A1 beschreibt die Kombination aus lichtinduzierter und thermisch aktivierter Hydrosilylierungsreaktion. Die WO 2010049388 A1 beschreibt eine aufeinander folgende Kombination dieser Vernetzungsreaktionen, indem durch den ersten Belichtungsschritt das Silikongussteil bis hin zur Formstabilität anvernetzt und in einem zweiten Schritt thermisch durchgehärtet wird.

Eine Vielzahl von Patentanmeldungen offenbart ausgewählte aus zwei oder mehr Komponenten zusammengesetzte Silikonharzrezepturen, bei denen die mechanischen, thermischen und optischen Eigenschaften des ausgehärteten Silikons durch den Anteil an hochvernetztem Harz in der flüssigen Zusammensetzung, wie beispielsweise in WO 2010087523 A1 beschrieben, oder auch durch Eindispergierung fester Füllstoffe wie beispielsweise Silica, beschrieben in der JP 2010018662 A1, eingestellt wird.

Zur verbesserten Haftung der Dichtstoffe & Einbettmassen an den Untergründen und Kontaktflächen können, wie beispielsweise in der US 20100256300 A1 beschrieben, Alkoxysilane als Haftvermittler eingesetzt werden.

Eine Schwierigkeit bei der Verwendung von Mehr-Komponenten-Systemen ist die Stabilität der Zubereitung. Eine partielle Entmischung von nicht kompatiblen Silikonen bzw. Silanen oder die Ausfällung der festen Füllstoffe kann Phasenseparation bewirken und Fehler in den gehärteten Bauteilen verursachen. Weiterhin kann die Viskosität solch komplexer Formulierungen bei der Verarbeitbarkeit Grenzen setzen, wenn z. B. unerwünschte Lufteinschlüsse nicht schnell genug ausgasen. Kommt es bei der Aushärtung zur Ausbildung von Domänen mit unterschiedlich starkem Vernetzungsgrad, führen die daraus resultierenden schwankenden mechanischen Eigenschaften zu einem inhomogenen Material mit Sollbruchstellen.

Härtbare Einkomponenten-Silikonmassen werden bevorzugt eingesetzt, um die beschriebenen Nachteile der Mehrkomponenten-Systeme zu umgehen. So nennt beispielsweise die WO 2006/055456 A1 unter anderem die Verwendung eines Einkomponenten-Silikonharzes zur Herstellung von LEDs durch Photohydrosilylierung.

Lineare Vinylhydrogenpolysiloxane und ihre Verwendungen werden beschrieben in den Schriften WO 2008/036662 A1, WO 2008/036657 A1 und EP 0490401 A1. Die DE 102009015211 A1 beschreibt Enzympräparate, welche mit Hilfe von Vinylhydrogenpolysiloxanen hergestellt werden, die linear oder verzweigt sein können und die Polyethersubstituenten enthalten.

Über C₆H₅-SiO_{3/2}-Einheiten verzweigte Vinylhydrogenpolysiloxane beschreibt die US 43339564 A1. In dieser Schrift und in der US 4578493 A1 werden zudem Einkomponenten-Silikonmassen beschrieben, bei denen die SiH-Funktionen seitenständig in der Siloxankette gebunden sind. Die US 2007/265410 A1 beschreibt einen Prozess zur Herstellung solcher Einkomponenten-Silikonmassen durch Hydrolyse und Kondensation von Chlorsilanen. Durch den Kontakt mit der bei diesem Prozess freigesetzten wässrigen Salzsäure werden einige der seitenständig in der Siloxankette gebundenen SiH-Gruppen hydrolytisch zu SiOH-Gruppen abgebaut, so dass eine Kontrolle des Vorvernetzungsgrades der flüssigen Silikonmasse erschwert ist.

Weiterhin beschreibt die WO 2010/129123 A1 härtbare Einkomponenten-Silikonmassen mit seit- und/oder endständigen SiH-Funktionen und seitständigen Vinylfunktionen, die SiOH-Gruppen aufweisen können. Die Herstellung der Siloxane erfolgt durch Umsetzung von Chlorsilanen in Gegenwart von Wasser. Dadurch können die Siloxane SiOH-Gruppen aufweisen, bei deren Kondensation Wasser entsteht, welches nur langsam verdampft und zur Erzielung einer vollständigen Aushärtung ausgeheizt werden muss. Zudem weisen die in der WO 2010/129123 A1 beschriebenen härtbaren Einkomponenten-Silikonmassen die Mehrzahl der reaktiven Vinyl- und SiH-Funktionen seitständig gebunden in der Silikonkette auf.

Die WO 2003/080753 A1 beschreibt härtbare Einkomponenten-Silikonmassen, welche über R-SiO_{3/2}- und SiO_{4/2}-Einheiten verzweigt sind und die keine R₂SiO_{2/2}-Einheiten aufweisen. Es werden sehr harte Materialien mit sehr niedrigen thermischen Ausdehnungskoeffizienten erhalten. Mangelnde Elastizität kann bei solch spröden Materialien dazu führen, dass bereits bei geringer mechanischer Beanspruchung Haarrisse entstehen, welche die Witterungsbeständigkeit des Materials herabsetzen.

Aufgabe der vorliegenden Erfindung war es, eine härtbare Einkomponenten-Silikonmasse bereitzustellen, welche schnell und homogen aushärtet, vorzugsweise gut mit den Untergründen und Kontaktflächen verklebt und dabei bevorzugt keiner zusätzlichen Entlüfter bedarf.

Überraschenderweise wurde gefunden, dass die Verwendung von Polysiloxanen der Formel (I) wie nachfolgend beschrieben diese Aufgaben lösen.

Gegenstand der vorliegenden Erfindung sind deshalb Polysiloxane der Formel (I)

Mₐ₁M^{H}ₐ₂M^{Vi}ₐ₃D_{b1}D^{H}_{b2}D^{Vi}_{b3}T_{c1}T^{H}_{c2}T^{Vi}_{c3}Qd (I)

wie nachfolgend definiert.

Ebenfalls Gegenstand der vorliegenden Erfindung ist ein Verfahren zur Herstellung von Polysiloxanen, insbesondere solchen der Formel (I), sowie deren Verwendung, insbesondere als oder zur Herstellung von härtbaren Einkomponenten-Silikonmassen.

Die erfindungsgemäße Polysiloxane haben den Vorteil, dass durch die Anpassung der Polymereinheiten die mechanischen Eigenschaften der Einkomponenten-Silikonmassen gezielt eingestellt werden können, ohne dass Mischungen von mehreren Siloxankomponenten erforderlich sind.

Die erfindungsgemäßen Polysiloxane bzw. die daraus hergestellten härtbaren Einkomponenten-Silikonmassen weisen eine gute Adhäsion zu den verschiedensten Untergründen auf. Unter guter Adhäsion wird dabei verstanden, dass durch Reiben mit der Fingerspitze auf der Oberfläche des ausgehärteten Silikons keine Rissbildung und keine Ablösung vom Untergrund verursacht wird.

Ein Vorteil der erfindungsgemäßen Polysiloxane bzw. insbesondere der daraus hergestellten härtbaren Einkomponenten-Silikonmassen ist die niedrige Viskosität, was gute Verarbeitungseigenschaften, wie beispielsweise eine gute Benetzung der Kontaktflächen, ein gutes Fließen in geometrisch schwer zugängliche Ecken und eine weitgehende Vermeidung von Gaseinschlüssen z. B. in Gießverfahren gewährt. Komplexe Formen können somit fehlerfrei oder nahezu fehlerfrei hergestellt werden.

Die erfindungsgemäßen Polysiloxane haben den Vorteil, dass aus ihnen hergestellte, härtbare Einkomponenten-Silikonmassen ohne den Zusatz von Entlüftern hergestellt werden können, da Gaseinschlüsse schnell aus der niedrigviskosen Silikonmasse heraus diffundieren können.

Die mit den erfindungsgemäßen Polysiloxanen hergestellten, härtbaren Einkomponenten-Silikonmassen haben den Vorteil, dass sie auch ohne Füllstoffbeladung gute mechanische Eigenschaften im ausgehärteten Zustand aufweisen. Es kann bei Verwendung der erfindungsgemäßen Polysiloxane auf die Zugabe von festen, pulverförmigen Füllstoffen, die im Silikon aufwendig dispergiert werden müssen, teilweise oder ganz verzichtet werden, die sonst häufig die Bildung von Gaseinschlüssen fördert, die Viskosität erhöht und zudem die Aushärtungskatalyse beeinträchtigen kann.

Ein weiterer Vorteil der erfindungsgemäßen Polysiloxane bzw. insbesondere der daraus hergestellten härtbaren Einkomponenten-Silikonmassen ist die schnelle Aushärtung bei vergleichsweise geringen Mengen an Hydrosilylierkatalysatoren. Auch vorteilhaft ist die geringe Beladung mit Edelmetallkatalysatoren, die nicht nur die Möglichkeit der Fertigung farbloser Bauteile mit hoher optischer Transparenz ermöglicht, sondern auch die Fertigung von Bauteilen für elektronische Anwendungen.

Vorteile der bei der Verwendung der erfindungsgemäßen Polysiloxane bzw. insbesondere der aus den hergestellten härtbaren Einkomponenten-Silikonmassen hergestellten Beschichtungen sind die hohe thermische Stabilität, die Witterungsbeständigkeit, die geringe thermische Ausdehnung und die geringe Vergilbungsneigung.

Ein weiterer Vorteil der erfindungsgemäßen Polysiloxane ist die Möglichkeit sie als Einkomponenten-System zu formulieren. Ein inaktiver Katalysator kann zugegeben werden, um dann durch Erhitzen oder Bestrahlung zum gewünschten Zeitpunkt aktiviert zu werden.

Die erfindungsgemäßen Polysiloxane, deren Herstellung, sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben wenn nicht anders angegeben auf die Gesamtzusammensetzung. Werden nachfolgend Mittelwerte angegeben, so handelt es sich, wenn nicht anders angegeben um Zahlenmittel. Werden nachfolgend Messwerte angegeben, so wurden diese Messwerte, wenn nicht anders angegeben, bei einem Druck von 101325 Pa und einer Temperatur von 25°C ermittelt.

Die erfindungsgemäßen Polysiloxane zeichnen sich dadurch aus, dass sie solche der Formel (I)

Mₐ₁M^{H}ₐ₂M^{Vi}ₐ₃D_{b1}D^{H}_{b2}D^{Vi}_{b3}T_{c1}T^{H}_{c2}T^{Vi}_{c3}Q_{d} (I)

sind, mit
M = [R²R¹₂SiO_{1/2}],
M^{H} = [R¹₂HSiO_{1/2}],
M^{Vi} = [R³R¹₂SiO_{1/2}],
D = [R¹₂SiO_{2/2}],
D^{H} = [R¹HSiO_{2/2}],
D^{Vi} = [R¹R³SiO_{2/2}],
T = [R⁴SiO_{3/2}],
T^{H} = [HSiO_{3/2}],
T^{Vi} = [R³SiO_{3/2}],
Q = [SiO_{4/2}],
R¹ unabhängig voneinander gleiche oder verschiedene, lineare, verzweigte und/oder zyklische, gesättigte oder ungesättigte Kohlenwasserstoffreste, vorzugsweise aliphatische Kohlenwasserstoffreste mit 1 bis 30 Kohlenstoffatomen oder aromatische Kohlenwasserstoffreste mit 6 bis 30 Kohlenstoffatomen, bevorzugt Methyl oder Phenyl, besonders bevorzugt Methyl,
R² unabhängig voneinander gleich R¹, ein Alkoxyrest oder eine Hydroxygruppe, bevorzugt R¹, besonders bevorzugt Methyl,
R³ unabhängig voneinander gleiche oder verschiedene, lineare oder verzweigte, olefinisch ungesättigte Kohlenwasserstoffreste, bevorzugt endständige Doppelbindungen enthaltende Kohlenwasserstoffreste, besonders bevorzugt Allyl oder Vinyl, ganz besonders bevorzugt Vinyl,
R⁴ unabhängig voneinander R¹ oder gleiche oder verschiedene lineare, verzweigte und/oder zyklische, gesättigte oder ungesättigte, Heteroatome, vorzugsweise Sauerstoff oder Halogenatome aufweisende Kohlenwasserstoffreste, bevorzugt Halogenalkyl-, Pseudohalogenalkyl- und Carboxyalkylreste, besonders bevorzugt 3-Chlorpropyl, Tridecafluoro-1,1,2,2-tetrahydrooctyl, Nonafluoro-1,1,2,2-tetrahydrohexyl, 3-Acryloxypropyl- und 3-Methacryloxypropyl,
a1 = 0 bis50, vorzugsweise <10, bevorzugt 0,
a2 = 1 bis 50, vorzugsweise 2 bis 30, bevorzugt >= 4,
a3 = 1 bis 50, vorzugsweise 2 bis 30, bevorzugt >= 4,
b1 = 10 bis 5000, vorzugsweise 10 bis 1000, bevorzugt 10-500,
b2 = 0 bis 30, vorzugsweise 0 bis 12, bevorzugt 0,
b3 = 0 bis 30; vorzugsweise 0 bis 12, bevorzugt 0;
c1 = 0 bis 50, vorzugsweise 1 bis 50, bevorzugt >0;
c2 = 0 bis 50, vorzugsweise 0 bis 50, bevorzugt 0,
c3 = 0 bis 50, vorzugsweise 0 bis 50, bevorzugt 0,
d = 0 bis 50, vorzugsweise 2 bis 20, bevorzugt 4 bis 10,
mit der Maßgabe, dass die Summe c1 + c2 + c3 + d größer-gleich 1 ist. Vorzugsweise ist d größer-gleich 1, bevorzugt von 4 bis 10 und c1 = c2 = c3 = 0.

Die verschiedenen Monomereinheiten der Polysiloxane der Formel (I) können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte zu betrachten.

Vorzugsweise weist bei den erfindungsgemäßen Polysiloxanen die Summe a2 + b2 + c2 zur Summe a3 + b3 + c3 ein Verhältnis von 1 zu 10 bis 10 zu 1, bevorzugt 1 zu 5 bis 5 zu 1 und besonders bevorzugt von insbesondere 1 zu 2 bis 2 zu 1 auf. Bevorzugt ist die Summe a2 + b2 + c2 gleich oder kleiner der Summe a3 + b3 + c3.

In einer bevorzugten Ausführungsform der vorliegenden Erfindung ist b1 > b2 und b1 > b3, insbesondere b1 > b2+b3. In einer besonders bevorzugten Ausführungsform der vorliegenden Erfindung ist b2=0, b3=0 und b1 > c1+c2+c3+d. In einer ganz besonders bevorzugten Ausführungsform der vorliegenden Erfindung sind b2, b3, c1, c2 und c3 gleich 0 und b1 > d.

Die erfindungsgemäßen Polysiloxane der Formel (I) sind bei einer Temperatur von 25 °C und einem Druck von 101325 Pa vorzugsweise flüssig. Bevorzugt weisen die erfindungsgemäßen Polysiloxane der Formel (I) eine Viskosität gemessen bei 25 °C in Anlehnung an die DIN 5391 mit einem Rotationsviskosimeter Brookfield Synchro-Lectric der Firma Brookfield (Gerätetyp LVT) und der Spindel LV 2 von kleiner 450 mPa*s auf.

Die erfindungsgemäßen Polysiloxane der Formel (I) können auf jede mögliche, dem Fachmann bekannte Weise hergestellt werden. Vorzugsweise werden die erfindungsgemäßen Polysiloxane gemäß dem nachfolgend beschriebenen erfindungsgemäßen Verfahren hergestellt.

Das erfindungsgemäße Verfahren zur Herstellung von verzweigten, olefinisch ungesättigte Gruppen und SiH-Gruppen aufweisenden Polysiloxanen, vorzugsweise erfindungsgemäßen der Formel (I) wie oben definiert, zeichnet sich dadurch aus, dass die Komponenten
a) ein oder mehrere Silane oder Siloxane, die ein oder mehrere SiH-Funktionen und keine olefinisch ungesättigten Kohlenwasserstoffreste aufweisen, und
b) optional ein oder mehrere SiH-Funktion-freie Siloxane, die keine olefinisch ungesättigten Kohlenwasserstoffreste aufweisen, und
c) ein oder mehrere Silane oder Siloxane, die ein oder mehrere olefinisch ungesättigten Kohlenwasserstoffresten aufweisen, und
d) ein oder mehrere Tetraalkoxysilane, und/oder
e) ein oder mehrere Trialkoxysilane, welche keine SiH- oder Vinylfunktionen aufweisen,
wobei alle eingesetzten Silane der Komponenten a), c), d) und e) Alkoxygruppen, vorzugsweise Methoxy- oder Ethoxygruppen aufweisen,
unter Zugabe von Wasser und in Anwesenheit von mindestens einem Brönstedt-sauren Katalysator, welcher vorzugsweise ausgewählt ist aus den Sulfonsäuren oder Sulfonsäuregruppen aufweisenden Verbindungen, umgesetzt werden.

Die molaren Einsatzmengen der Komponenten a) bis e) werden vorzugsweise so gewählt, dass Polysiloxane der Formel (I), insbesondere bevorzugte Polysiloxane der Formel (I) erhalten werden. Das molare Verhältnis der in Form der Edukte eingesetzten M^{Vi}-Einheiten zu den der in Form der Edukte eingesetzten M^{H}-Einheiten beträgt vorzugsweise 1 zu 0,8 bis 1 zu 4, bevorzugt 1 zu 1 bis 1 zu 3, besonders bevorzugt 1 zu 1 bis 1 zu 2 und ganz besonders bevorzugt 1 zu 1. Als Komponenten werden vorzugsweise keine Komponenten verwendet, die D^{H}- und D^{Vi}-Einheiten enthalten. Komponente a) ist demnach vorzugsweise ein Dimethylhydrogenalkoxysilan, Dihydrogentetramethyldisiloxan oder ein α,ω-Dihydrogenpolydimethylsiloxan und Komponente c) vorzugsweise ein Dimethylvinylalkoxysilan, Divinyltetramethyldisiloxan oder ein α,ω-Divinylpolydimethylsiloxan. Das über die Einsatzmengen der Komponenten a) bis e) gewählte molare Verhältnis von verzweigenden T- oder Q-Einheiten zu kettenterminierenden M-Einheiten beträgt vorzugsweise von 0,25 zu 1 bis 25 zu 1, bevorzugt 0,3 zu 1 bis 3 zu 1, besonders bevorzugt 0,5 zu 1 bis 1 zu 1. Das über die Einsatzmengen der Komponenten a) bis e) definierte molare Verhältnis aus der Summe von M-Einheiten, T- und Q-Einheiten zu den kettenverlängernden D-Einheiten ist vorzugsweise 1 zu 1 bis 1 zu 500, bevorzugt 1 zu 1 bis 1 zu 250.

Bevorzugt ist der Brönstedt-saure Katalysator ein bei 25 °C und 1013 mbar fester, Brönstedt-saurer Katalysator, welcher bevorzugt ausgewählt ist aus sauren Ionenaustauscherharzen, die Sulfonsäuregruppen aufweisen.

Als Brönstedt-saure Katalysatoren können die aus dem Stand der Technik bekannten Ionenaustauscher bzw. Ionenaustauscherharze eingesetzt werden. In dem erfindungsgemäßen Verfahren können sowohl natürliche Ionenaustauscher, wie beispielsweise Zeolithe, Montmorillonite, Attapulgite, Bentonite und andere Aluminiumsilikate sowie synthetische Ionenaustauscher eingesetzt werden. Letztere sind vorzugsweise Festkörper (meist in Körnerform) mit einer dreidimensionalen, wasserunlöslichen hochmolekularen Matrix auf der Basis von Phenol-FormaldehydHarzen oder Copolymerisate aus Styrol-Divinylbenzol, in die zahlreiche "Ankergruppen" unterschiedlicher Acidität eingebaut sind. Insbesondere können saure Tonerden oder saure Ionenaustauscherharze, wie beispielsweise die unter den Markennamen Amberlite®, Amberlyst® oder Dowex® und Lewatit® bekannten Produkte eingesetzt werden. Besonders bevorzugt wird als saurer Ionenaustauscher ein sulfonsaures Ionenaustauscherharz eingesetzt.

Als saure Ionenaustauscher werden in dem erfindungsgemäßen Verfahren vorzugsweise solche eingesetzt, wie sie in EP 1 439 200 beschrieben sind. Diese Schrift und die in ihr als Stand der Technik zitierten Schriften werden hiermit als Referenz eingeführt und gelten als Teil des Offenbarungsgehaltes der vorliegenden Erfindung.

Es kann vorteilhaft sein, wenn in dem erfindungsgemäßen Verfahren als Katalysator mindestens ein fester saurer Ionenaustauscher (Katalysator 1) und mindestens ein weiterer, nicht fester Brönstedt-saurer Katalysator (Katalysator 2), insbesondere eine flüssige Säure eingesetzt wird. Als Katalysator 2 kann dabei eine Mineralsäure, vorzugsweise Schwefelsäure und/oder, vorzugsweise eine organische Sulfonsäure, vorzugsweise Trifluormethansulfonsäure eingesetzt werden. Diese Katalysatormischung wird vorzugsweise direkt der Reaktionsmischung zugegeben. Bevorzugt wird als Katalysator eine Mischung aus Trifluormethansulfonsäure und einem sulfonsauren Ionenaustauscherharz, vorzugsweise Lewatit® K 2621 (Bayer Material Science) eingesetzt. Bevorzugt weist die Katalysatormischung ein MassenVerhältnis von Katalysator 1 zu Katalysator 2 von 10 zu 1 bis 100 zu 1 auf. Dieses Massenverhältnis ist insbesondere bei der Verwendung eines Lewatit^{®}-Katalysators als Katalysator 1 und von Trifluormethansulfonsäure als Katalysator 2 bevorzugt.

Das erfindungsgemäße Verfahren verzichtet vorzugsweise vollständig auf die Gegenwart von Lösungsmitteln, die mit Wasser in gleichen Gewichtsteilen nicht ohne Phasentrennung mischbar sind. Insbesondere werden in dem erfindungsgemäßen Verfahren keine Alkane oder aromatische Verbindungen als Lösungsmittel eingesetzt.

Es kann vorteilhaft sein, wenn in dem erfindungsgemäßen Verfahren Wasser oder eine Mischung aus Wasser und einem oder mehreren, mit Wasser in gleichen Gewichtsteilen ohne Phasentrennung mischbaren organischen Lösungsmitteln eingesetzt wird. Auf diese Weise kann eine bessere Kompatibilisierung und damit bessere Durchmischung des Wassers mit den Siloxanen und/oder Silanen erreicht werden. Eine gute Durchmischung kann aber auch dadurch erreicht werden, dass das Wasser unter einer besonders guten mechanischen Durchmischung zugegeben wird oder der Mischung aus Silanen und Siloxanen in Form von Dampf zugeführt wird, z. B. durch Einperlen von Wasserdampf in die Mischung.

Als mit Wasser (Normalbedingungen) in gleichen Gewichtsteilen ohne Phasentrennung mischbare organische Lösungsmittel, können vorzugsweise Alkohole, insbesondere Alkohole mit 1 bis 6 Kohlenstoffatomen, bevorzugt einwertige Alkohole und besonders bevorzugt Methanol oder Ethanol, insbesondere Ethanol eingesetzt werden. Vorzugsweise wird eine so große Menge dieses Lösungsmittels zugegeben, dass das Wasser ganz oder teilweise in der Reaktionsmischung homogenisiert ist. Wird eine Mischung von Wasser und einem entsprechenden Lösungsmittel, wie insbesondere Ethanol eingesetzt, beträgt das Gewichtsverhältnis von Wasser zu Lösungsmittel in dieser Mischung vorzugsweise von 1 zu 1 bis 10 zu 1, vorzugsweise 2 zu 1 bis 5 zu 1.

### Komponente a)

Als SiH-funktionelle Silane können z. B. Dimethylmonoalkoxysilane, Methyldialkoxysilane oder Trialkoxysilane eingesetzt werden. Als Siloxane, die ein oder mehrere SiH-Funktionen aufweisen, können z. B. solche eingesetzt werden, bei denen die SiH-Funktionen rein endständig, rein seitenständig oder gemischt end- und seitenständig im Siloxan angeordnet sind. Als SiH-funktionelle Siloxane können z. B. lineare Polymethylhydrogensiloxane, wie beispielsweise HMS-993 der Firma Gelest Inc., lineare Polydimethylmethylhydrogensiloxane wie beispielsweise HMS-031 und/oder HMS-071 der Firma Gelest Inc., lineare α,ω-Dihydrogenpolydimethylsiloxane, wie beispielsweise 1,1,3,3-Tetramethyldisiloxan und/oder 1,1,3,3,5,5-Hexamethyltrisiloxan, höhermolekulare Oligomere, wie beispielsweise DMS-H03 und/oder DMS-H11 der Firma Gelest Inc., cyclische Polymethylhydrogensiloxane, wie beispielsweise Tetramethylcyclotetrasiloxan oder Pentamethylcyclopentasiloxan und cyclische Polydimethylmethylhydrogensiloxane wie beispielsweise Heptamethylcyclotetrasiloxan und/oder Nonamethylcyclopentasiloxan, oder Mischungen davon eingesetzt werden. Besonders bevorzugt werden als SiH-funktionelle Siloxane 1,1,3,3-Tetramethyldisiloxan, DMS-H03, HMS-993 (jeweils Firma Gelest Inc.) und Pentamethylcyclopentasiloxan eingesetzt.

### Komponente b)

Als SiH-Funktion-freie Siloxane können z. B. lineare Polydimethylsiloxane, wie beispielsweise Hexamethyldisiloxan oder cyclische Polydimethylsiloxane, wie beispielsweise Octamethylcyclotetrasiloxan und/oder Decamethylcyclopentasiloxan, eingesetzt werden. Vorzugsweise werden Hexamethyldisiloxan und Decamethylcyclopentasiloxan eingesetzt.

### Komponente c)

Als Silane und Siloxane, die mindestens einen olefinisch ungesättigten Kohlenwasserstoffrest aufweisen, werden vorzugsweise solche eingesetzt, die mindestens einen Undecenyl-, Allyl- oder Vinyl-Rest aufweisen. Bevorzugt werden Silane oder Siloxane als Komponente c) ausgewählt aus den Allyltrialkoxysilanen, wie z. B. Allyltrimethoxysilan oder Allyltriethoxysilan, Allyldialkoxysilanen, wie z. B. Allyldimethoxysilan, Allylmethyldimethoxysilan, Allyldiethoxysilan oder Allylmethyldiethoxysilan, Allylmonoalkoxysilanen, Undecenyltrialkoxysilanen, wie z.B. Undecenyltrimethoxysilan, Vinyltrialkoxysilane, wie z.B. Vinyltrimethoxysilan, Vinyltriethoxysilan, Vinyltriisopropoxysilan oder Vinyltributoxysilan, Vinyldialkoxysilane, wie z.B. Vinyldimethoxysilan, Vinylmethyldimethoxysilan, Vinylphenyldimethoxysilan Vinyldiethoxysilan, Vinylmethyldiethoxysilan, Vinylphenyldiethoxysilan,x und Vinylmonoalkoxysilanen, wie z.B. Vinylphenylmethylmethoxysilan, Allyloxyundecyltrimethoxysilan, 1,3-Diallyltetramethyldisiloxan, Vinyltriacetoxysilan, 1,3-Divinyltetramethyldisiloxan, Vinyltetramethyldisiloxan und 1,3-Divinyltetraphenyldisiloxan, eingesetzt.

### Komponente d)

Als Tetraalkoxysilane können prinzipiell alle Tetraalkoxysilane, insbesondere Tetramethoxysilan, Tetraethoxysilan oder Tetraisopropoxysilan oder deren Kondensate eingesetzt werden. Als Tetraalkoxysilane können solche eingesetzt werden, bei denen die Alkoxyreste alle gleich, alle unterschiedlich oder teilweise gleich sind. Besonders bevorzugt ist die Verwendung von Tetraethoxysilan.

### Komponente e)

Als Trialkoxysilane können prinzipiell alle Trialkoxysilane eingesetzt werden, die von Komponente a) und c) verschieden sind. Als Trialkoxysilane können insbesondere solche eingesetzt werden, bei denen die Alkoxyreste alle gleich, alle unterschiedlich oder teilweise gleich sind. Als Trialkoxylsilane können insbeosndere solche eingesetzt werden, die von Komponente a) und c) verschieden sind. Besonders bevorzugt ist die Verwendung von Triethoxysilanen, vorzugsweise Alkyltriethoxysilane, wie beispielsweise Methyltriethoxysilan, Ethyltriethoxysilan, n-Propyltriethoxysilan, Isobutyltriethoxysilan, Pentyltriethoxysilan, Hexyltriethoxysilan, Octyltriethoxysilan, Hexadecyltriethoxysilan, n-Octadecyltriethoxysilan, halogenhaltige oder pseudohalogenhaltige Alkyltrialkoxysilane, insbesondere halogenhaltige oder pseudohalogenhaltige Alkyltriethoxysilane, wie beispielsweise Chlorpropyltriethoxysilan, Tridecafluoro-1,1,2,2-tetrahydrooctyltriethoxysilan, Nonafluoro-1,1,2,2-tetrahydrohexyltriethoxysilan, 3-Cyanopropyltriethoxysilan, Trialkoxysilane, insbesondere Triethoxysilane mit funktionellen Gruppen, wie beispielsweise 3-Acryloxypropyltriethoxysilan, 3-Methacryloxypropyltriethoxysilan, 5-(Bicycloheptenyl)triethoxysilan, Phenyltriethoxysilan, (p-Chloromethyl)phenyltriethoxysilan, oder Dihydro-3-[3-(triethoxysilyl)propyl]furan-2,5-dion, eingesetzt werden. Es kann vorteilhaft sein, wenn organisch funktionalisierte Trialkoxysilane als Verzweigungseinheit eingesetzt werden (einäquilibiert werden). Bevorzugte Trialkoxysilane sind, Methyltriethoxysilan und Phenyltriethoxysilan.

Es kann vorteilhaft sein in dem erfindungsgemäßen Verfahren ein oder mehrere Tetraalkoxysilane und ein oder mehrere Trialkoxysilane einzusetzen. Bevorzugt werden aber ein oder mehrere Tetraalkoxysilane (Komponente d)) und keine Trialkoxysilane (Komponente c)) eingesetzt.

Vorzugsweise werden in dem erfindungsgemäßen ausschließlich Komponenten a) bis e) eingesetzt, die unter Normalbedingungen (25 °C, 1013 mbar) als Flüssigkeit vorliegen.

In dem erfindungsgemäßen Verfahren können die Komponenten in Gegenwart des Katalysators oder der Katalysatoren in einem Verfahrensschritt umgesetzt werden. Vorzugsweise wird das erfindungsgemäße Verfahren in einem mehrstufigen, bevorzugt zweistufigen Verfahren durch geführt. Unabhängig von der Anzahl der Verfahrensstufen kann es vorteilhaft sein, wenn die Komponenten sequentiell zugegeben werden. Dies ist insbesondere bei dem mehrstufigen, bevorzugt zweistufigen, Verfahren der Fall.

Eine Reaktionsmischung kann durch beliebiges Mischen der Komponenten erhalten werden. Es können entweder alle beteiligten Komponenten gemischt und zur Reaktion gebracht werden oder es kann zunächst nur ein Teil der Komponenten gemischt und zur Reaktion gebracht werden und das Reaktionsprodukt mit einer oder mehreren weiteren Komponenten zur Reaktion gebracht werden.

Vorzugsweise wird nach dem Vermischen der Komponenten mindestens ein Brönstedt-saurer Katalysator zugegeben. Der Katalysator kann der Reaktionsmischung ganz oder teilweise direkt zugegeben oder während der Reaktion in beliebiger Reihenfolge zudosiert werden.

Vorzugsweise werden zunächst die Komponenten vermischt, dann der Katalysator zugegeben und anschließend das Wasser bzw. eine wässrige Mischung zugefügt.

Werden als Katalysator die zwei Katalysatoren 1 und 2 eingesetzt, so kann es vorteilhaft sein, wenn zu der Mischung der Komponenten zunächst der Katalysator 2, vorzugsweise vollständig zugegeben wird, anschließend das Wasser zugefügt wird und erst nach der vorzugsweise vollständigen Zugabe von Wasser der Katalysator 1 zugegeben wird. Die Katalysatoren 1 und 2 können aber auch beide vor der Zugabe des Wassers den Komponenten zugegeben werden.

Wird die Herstellung in dem erfindungsgemäßen Verfahren in einem zweistufigen Verfahren durchgeführt, so kann es vorteilhaft sein, Katalysator 2 mit oder ohne Anwesenheit von Katalysator 1 in dem ersten Verfahrensschritt unter Einsatz der Komponenten a), c) und d) und/oder e) und Wasser und nur Katalysator 2 im zweiten Verfahrensschritt unter Einsatz einer oder mehrerer der Komponenten a) bis c), vorzugsweise unter Einsatz der Komponenten a) und b) zu verwenden.

In dem erfindungsgemäßen Verfahren wird dem Reaktionsgemisch vorzugsweise soviel an Brönstedt-saurem Katalysator zugegeben, dass die Summe der eingesetzten Brönstedt-sauren Katalysatoren von 0,01 bis 10 Gew.-% bezogen auf die Summe der Masse an eingesetzten Komponenten a) bis e) beträgt. Je nach Art und Konzentration des eingesetzten Katalysators können bestimmte Unterbereiche dieses Bereichs bevorzugt sein. Besonders bevorzugt ist beispielsweise die Verwendung von Trifluormethansulfonsäure in Mengen von 0,05 Gew.-% bis 0,5 Gew.-%. Wird als Katalysator ein Ionenaustauscherharz allein eingesetzt, so beträgt die eingesetzte Masse an Katalysator vorzugsweise von 3 bis 10 Gew.-%. Wird als Katalysator eine Kombination von Mineralsäure und/oder organischen Sulfonsäuren mit einem Ionenaustauscherharz eingesetzt, so beträgt die Masse an eingesetztem Ionenaustauscherharz vorzugsweise von 3 bis 6 Gew.-% bezogen auf die Summe der Masse an eingesetzten Komponenten a) bis e).

In dem erfindungsgemäßen Verfahren werden pro Mol eingesetztem Alkoxysilan vorzugsweise von 0,5 bis 30 Mol Wasser eingesetzt. Zur Hydrolyse und Kondensation werden bevorzugt 1 bis 6 Mol Wasser pro Mol Alkoxysilan eingesetzt. Das Wasser kann in einem Schritt zugegeben oder bevorzugt über einen längeren Zeitraum zudosiert werden. Aufgrund der gewählten Wassermenge tritt eine Phasentrennung üblicherweise nicht auf.

Die Umsetzung wird im erfindungsgemäßen Verfahren vorzugsweise bei einer Temperatur von 0° C bis 100° C, bevorzugt von 20 °C bis 60 °C durchgeführt.

Nach Beendigung der Reaktion können die flüchtigen Nebenprodukte der Kondensation, z. B. durch schonende Vakuumdestillation entfernt werden. Falls erforderlich oder gewünscht kann eine Neutralisation, z. B. mit einem basischen Salz, vorzugsweise mit Natriumhydrogencarbonat, durchgeführt werden.

Die erfindungsgemäßen Polysiloxane der Formel (I) oder die erfindungsgemäß hergestellten Polysiloxane können z. B. als oder zur Herstellung von härtbaren (Einkomponenten-)Silikonmassen verwendet werden.

Solche erfindungsgemäßen härtbaren Silikonmassen, insbesondere Einkomponenten-Silikonmassen, die erfindungsgemäße Polysiloxane der Formel (I) oder erfindungsgemäß hergestellte Polysiloxane enthalten, können weitere Bestandteile aufweisen, z. B. die chemischen oder physikalischen Eigenschaften einstellen bzw. beeinflussen können. Beispielsweise können die erfindungsgemäßen Silikonmassen Partikel zur Modifizierung der rheologischen oder optischen Eigenschaften, wie zum Beispiel feinteilige Kieselsäure (Aerosil) zur Einstellung rheologischer Eigenschaften, wie Thixotropie oder Scherverdünnung, Partikel zur Veränderung des Brechungsindexes wie Titandioxid, oder Phosphorverbindungen zur Spektrenveränderung durch Fluoreszenz-Effekte enthalten. Als Bestandteile, die z.B. die thermische Ausdehnung, die Wärmeleitfähigkeit oder die elektrische Leitfähigkeit beeinflussen können, können die erfindungsgemäßen Silikonmassen z.B. oder elektrisch oder thermisch leitfähige Substanzen wie z. B. Metalle, wie z.B. Silber, Nickel, Kupfer oder Gold, oder z.B. Oxide, wie z. B. Indiumzinnoxid oder Zinkoxid, enthalten.

Die erfindungsgemäßen härtbaren Silikonmassen können als Dicht- & Klebstoffzubereitungen, Beschichtungsmassen und Verkapselungs- sowie Einbettmassen verwendet werden oder solche Dicht- & Klebstoffzubereitungen, Beschichtungsmassen und Verkapselungs- sowie Einbettmassen sein.

Die erfindungsgemäßen härtbaren Silikonmassen können mit den Hydrosilylierkatalysatoren des Standes der Technik formuliert werden, wie beispielsweise Platinkatalysatoren, welche thermisch oder mit UV-Strahlung aktiviert werden können. Bei Raumtemperatur aktive Platinkatalysatoren können wie im Stand der Technik üblich durch Zugabe von Inhibitoren modifiziert werden.

Gegenstand der Erfindung sind weiterhin ausgehärtete Massen hergestellt unter Verwendung der erfindungsgemäßen Polysiloxane der Formel (I) oder der erfindungsgemäß hergestellten Polysiloxane. Solche ausgehärteten Massen können z. B. Folien, elektronische, optische und optoelektronische Bauteile, Verbundprodukte und Halbzeuge sein. Die Eigenschaften dieser ausgehärteten Massen werden durch die Zusammensetzung der erfindungsgemäßen Polysiloxane der Formel (I) und den zuvor beschriebenen Zuschlagstoffen beeinflusst.

### Messmethode(n):

Die Aufnahme und Interpretation der NMR-Spektren ist dem Fachmann bekannt. Als Referenz sei hiermit eingeführt das Buch "NMR Spectra of Polymers and Polymer Additives" von A. Brandolini und D. Hills, erschienen im Jahr 2000 beim Verlag Marcel Dekker Inc.. Die Viskositäten wurden mit einem Rotationsviskosimeter Brookfield Synchro-Lectric der Firma Brookfield (Gerätetyp LVT) und der Spindel LV 2 in Anlehnung an die DIN 5391 bestimmt.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll. Die in den Überschriften der Synthesebeispiele genannten Summenformeln entsprechen der theoretischen Zusammensetzung, wie sie aus den jeweiligen Einwaagen der Edukte hervorgeht.

### Beispiele:

### Beispiel 1: Herstellung olefinisch ungesättigter SiH-funktioneller Polysiloxane der Formel M^{Vi}₆M^{H}₆D₂₁Q₅

198,7 g eines alpha, omega-Dihydrogenpolydimethylsiloxans mit einem SiH-Wert von 3,0 val SiH/kg, 55,9 g Divinyltetramethyldisiloxan (ABCR, 96 %) und 104,0 g Tetraethoxysilan (Sigma Aldrich, 98 %) wurden in einem Vierhalskolben, ausgestattet mit einem KPG-Rührer, einem Innenthermometer, einem Tropftrichter und einer Destillationsbrücke unter Rühren bei 40 °C vorgelegt, 0,206 ml Trifluormethansulfonsäure (erhältlich bei Sigma Aldrich) zugegeben und 2 Stunden gerührt. Innerhalb von 20 Minuten wurde unter Rühren eine Mischung aus 18 g deionisiertem Wasser und 4,5 g Ethanol zugetropft und weitere zwei Stunden gerührt. Dann wurde überschüssiges Wasser und Alkohol im Wasserstrahlpumpenvakuum von ca. 12 mbar 3 Stunden bei 40 °C - 50 °C abdestilliert. Es wurde mit 7 g Natriumhydrogencarbonat neutralisiert und filtriert. Man erhielt eine klare, farblose Flüssigkeit mit einer Viskosität von 10 mPa*s bei Raumtemperatur und einem Wasserstoffgehalt von 1,9 val SiH/kg (89,6% der Theorie). Aus dem ²⁹Si-NMR-Spektrum errechnete sich ein Verhältnis von M-Einheiten zu D-Einheiten von 1:1,91. Daraus resultiert eine Summenformel von **M^{Vi}₆M^{H}_{5,3}D_{21,7}Q₅**

### Beispiel 2: Herstellung olefinisch ungesättigter SiH-funktioneller Polysiloxane der Formel M^{Vi}₆M^{H}_{5,7}D₈₇Q₅

102,2 g Decamethylcyclopentasiloxan (erhältlich bei der Firma Gelest Inc.), 3,63 g eines alpha, omega-Dihydrogenpolydimethylsiloxans mit einem SiH-Wert von 3,0 val SiH/kg und 60 g des in Beispiel 1 hergestellten Siloxans wurden in einem Vierhalskolben, ausgestattet mit einem KPG-Rührer, einem Innenthermometer, einem Tropftrichter und einer Destillationsbrücke unter Rühren bei 40 °C vorgelegt. Nach Zugabe von 9,9 g des vorgetrockneten sulfonsauren Kationenaustauscherharzes Lewatit^{®} K 2621 (10 Gew.-% Wassergehalt - bestimmt in Anlehnung an die Karl-Fischer-Methode) wurde 6 Stunden bei 40 °C gerührt. Das Harz wurde abfiltriert und das Produkt bei 130 °C und 12 mbar 2 Stunden destilliert. Als Rückstand wurde eine klare, farblose Flüssigkeit mit einer Viskosität von 90 mPa*s bei Raumtemperatur und einem Wasserstoffgehalt von 0,5 val SiH/kg (66% der Theorie) erhalten. Aus dem ²⁹Si-NMR-Spektrum errechnete sich ein Verhältnis von M-Einheiten zu D-Einheiten von 1:7,3.

### Beispiel 3: Herstellung olefinisch ungesättigter SiH-funktioneller Polysiloxane der Formel M^{Vi}₆M^{H}_{5,8}D₁₄₂Q₅

124,6 g Decamethylcyclopentasiloxan (erhältlich bei der Firma Gelest Inc.), 2,43 g eines alpha, omega-Dihydrogenpolydimethylsiloxans mit einem SiH-Wert von 3,0 val SiH/kg und 40 g des in Beispiel 1 hergestellten Siloxans wurden in einem Vierhalskolben, ausgestattet mit einem KPG-Rührer, einem Innenthermometer, einem Tropftrichter und einer Destillationsbrücke unter Rühren bei 40 °C vorgelegt. Nach Zugabe von 10 g des vorgetrockneten sulfonsauren Kationenaustauscherharzes Lewatit^{®} K 2621 (10 Gew% Wassergehalt - bestimmt in Anlehnung an die Karl-Fischer-Methode) wurde 6 Stunden bei 40 °C gerührt. Das Harz wurde abfiltriert und das Produkt bei 130 °C und 12 mbar 2 Stunden destilliert. Als Rückstand wurde eine klare, farblose Flüssigkeit mit einer Viskosität von 45 mPa*s bei Raumtemperatur und einem Wasserstoffgehalt von 0,41 val SiH/kg (82% der Theorie) erhalten. Aus dem ²⁹Si-NMR-Spektrum errechnete sich ein Verhältnis von M-Einheiten zu D-Einheiten von 1:12,9.

### Beispiel 4: Herstellung olefinisch ungesättigter SiH-funktioneller Polysiloxane der Formel M^{Vi}₆M^{H}₆D₁₉₆Q₅

135,6 g Decamethylcyclopentasiloxan (erhältlich bei der Firma Gelest Inc.), 2,43 g eines alpha, omega-Dihydrogenpolydimethylsiloxans mit einem SiH-Wert von 3,0 val SiH/kg und 30 g des in Beispiel 1 hergestellten Siloxans wurden in einem Vierhalskolben, ausgestattet mit einem KPG-Rührer, einem Innenthermometer, einem Tropftrichter und einer Destillationsbrücke unter Rühren bei 40 °C vorgelegt. Nach Zugabe von 10 g des vorgetrockneten sulfonsauren Kationenaustauscherharzes Lewatit^{®} K 2621 (10 Gew% Wassergehalt - bestimmt in Anlehnung an die Karl-Fischer-Methode) wurde 6 Stunden bei 40 °C gerührt. Das Harz wurde abfiltriert und das Produkt bei 130 °C und 10-15 mbar 2 Stunden destilliert. Als Rückstand wurde eine klare, farblose Flüssigkeit mit einer Viskosität von 181 mPa*s bei Raumtemperatur und einem Wasserstoffgehalt von 0,28 val SiH/kg (75% der Theorie) erhalten. Aus dem ²⁹Si-NMR-Spektrum errechnete sich ein Verhältnis von M-Einheiten zu D-Einheiten von 1:23.

Die Beispiele 1 bis 4 zeigen, dass durchweg niedrigviskose Flüssigkeiten, also Flüssigkeiten mit einer Viskosität bei 23 °C von kleiner 450 mPa*s erhalten werden.

### Vergleichsbeispiele Beispiel 5: Vergleichsbeispiel 1 zur Herstellung olefinisch ungesättigter SiH-funktioneller Polysiloxane der Formel M^{H}₂D^{Vi}₂₂D^{H}₄₃ aus WO 2010/129123

5,23 g Dihydrogentetramethyldisiloxan (erhältlich bei der Firma ABCR), 73,8 g Tetramethyltetravinylcyclotetrasiloxan (erhältlich bei der Firma ABCR), 100 g Tetrahydrogentetramethylcyclotetrasiloxan wurden in einem Dreihalskolben, ausgestattet mit einem KPG-Rührer, einem Innenthermometer, einem Stickstoffhahn unter Rühren bei Raumtemperatur vorgelegt, 0,179 g Trifluormethansulfonsäure (erhältlich bei Sigma Aldrich) zugegeben und 6 Stunden gerührt. Anschließend wurden 3,6 g Natriumhydrogencarbonat zugegeben und über Nacht bei Raumtemperatur gerührt. Die Mischung wurde anschließend für weitere 6 Stunden bei 60 °C zur Neutralisation gebracht und filtriert. Es wurde eine klare, farblose Flüssigkeit mit einer Viskosität von 38 mPa*s bei Raumtemperatur und einem Wasserstoffgehalt von 9,72 val SiH/kg erhalten. Aus dem ²⁹Si-NMR-Spektrum errechnete sich ein Verhältnis von M-Einheiten zu D-Einheiten von 1:32.

### Beispiel 6: Vergleichsbeispiel 2 zur Herstellung olefinisch ungesättigter SiH-funktioneller Polysiloxane der Formel M^{H}₄D₃₀₂T^{Vi}₂

8,78 g eines alpha, omega-Dihydrogenpolydimethylsiloxans mit einem SiH-Wert von 3,0 val SiH/kg, 150 g Decamethylpentasiloxan (erhältlich bei der Firma Gelest Inc.) und 0,16 g Trifluormethansulfonsäure (erhältlich bei Sigma Aldrich) wurden in einem Vierhalskolben, ausgestattet mit einem KPG-Rührer, einem Innenthermometer, einem Tropftrichter und einer Destillationsbrücke unter Rühren bei Raumtemperatur vorgelegt. Anschließend wurden 2,76 g Vinyltriethoxysilan (Evonik Industries) hinzugegeben und bei 40 °C für 2 Stunden gerührt. Danach wurde unter Rühren eine Mischung aus 0,4 g deionisiertem Wasser und 0,01 g Ethanol zugetropft und weitere zwei Stunden bei 45 °C gerührt. Dann wurde überschüssiges Wasser und Alkohol im Rotationsverdampfer bei ca. 1 mbar 2 Stunden bei 40 °C - 50 °C abdestilliert. Es wurde mit 3,2 g Natriumhydrogencarbonat neutralisiert und filtriert. Schließlich wurde überschüssiges Decamethylpentasiloxan bei 110 °C und 1 mbar am Rotationsverdampfer entfernt. Es wurde eine klare, farblose Flüssigkeit mit einer Viskosität von 488 mPa*s bei Raumtemperatur und einem Wasserstoffgehalt von 0,14 val SiH/kg erhalten. Aus dem ²⁹Si-NMR-Spektrum errechnete sich ein Verhältnis von M-Einheiten zu D-Einheiten von 1:85.

### Beispiel 7: Vergleichsbeispiel 3 zur Herstellung olefinisch ungesättigter SiH-funktioneller Polysiloxane der Formel M₂D_{9,1}^{Vi}D_{7,0}D_{16,7}^{H}

6,48 g Hexamethyldisiloxan (erhältlich bei Fluka), 31 g Tetramethyltetravinyltetrasiloxan (erhältlich bei der Firma ABCR), 39,84 g Tetrahydrogentetramethyltetrasiloxan (erhältlich bei der Firma ABCR) und 0,14 g Trifluormethansulfonsäure (erhältlich bei Sigma Aldrich) wurden in einem Vierhalskolben, ausgestattet mit einem KPG-Rührer, einem Innenthermometer, einem Tropftrichter und einer Destillationsbrücke unter Rühren bei Raumtemperatur vorgelegt. Anschließend wurden 54,69 g Methylphenyldiethoxysilan (erhältlich bei der Firma ABCR) hinzugegeben und bei 40 °C für 2 Stunden gerührt. Danach wurde unter Rühren eine Mischung aus 2,3 g deionisiertem Wasser und 0,58 g Ethanol zugetropft und weitere zwei Stunden bei 45 °C gerührt. Dann wurde überschüssiges Wasser und Alkohol im Rotationsverdampfer bei ca. 1 mbar 2 Stunden bei 40 °C - 50 °C abdestilliert. Es wurde mit 2,6 g Natriumhydrogencarbonat neutralisiert und filtriert. Schließlich wurde überschüssiges bei 110 °C und 1 mbar am Rotationsverdampfer destilliert. Es wurde eine klare, farblose Flüssigkeit mit einer Viskosität von 13 mPa*s bei Raumtemperatur und einem Wasserstoffgehalt von 4,5 val SiH/kg erhalten.

### Anwendung als Beschichtung und Vergussmasse:

### Beispiel 8: Formulierungsbeispiel F1

10 g des in Beispiel 1 hergestellten Vinylhydrogensiloxans wurden mit 0,3 g einer Lösung eine s Platin (0)-Divinyltetramethyldisiloxankomplexes in Decamethylcyclopentasiloxan in der Konzentration von 0,1 Gew.-% Platin (erhältlich bei Umicore mit 21,37 gew% Platin, welches durch Verdünnen mit Decamethylcyclopentasiloxan auf 0,1 gew% Pt eingestellt wird) vermischt. Nach dem Vermischen härtete die Mischung innerhalb von 10 Minuten bei Raumtemperatur. Der Zeitpunkt der Härtung wurde erreicht, wenn die Mischung "klebefrei" (tack-free) war. Bei sensorischer Prüfung der Oberfläche des gehärteten Silikons mit der Fingerspitze fühlt sich ein gehärtetes Silikon glatt und nicht mehr klebrig oder flüssig an.

### Beispiel 9: Formulierungsbeispiel F2

Die Formulierung erfolgt wie in Beispiel 5 mit der Ausnahme, dass das Produkt aus Beispiel 2 an Stelle des Produkts aus Beispiel 1 eingesetzt wurde. Nach dem Mischen härtet die Mischung innerhalb von 5 Minuten bei Raumtemperatur.

### Beispiel 10: Formulierungsbeispiel F3

Die Formulierung erfolgt wie in Beispiel 5 mit der Ausnahme, dass das Produkt aus Beispiel 3 an Stelle des Produkts aus Beispiel 1 eingesetzt wurde. Nach dem Mischen härtet die Mischung innerhalb von 2 Minuten bei Raumtemperatur.

### Beispiel 11: Formulierungsbeispiel F4

Die Formulierung erfolgt wie in Beispiel 5 mit der Ausnahme, dass das Produkt aus Beispiel 4 an Stelle des Produkts aus Beispiel 1 eingesetzt wurde. Nach dem Mischen härtet die Mischung innerhalb von 2 Minuten bei Raumtemperatur.

### Beispiel 12: Formulierungsbeispiel F5

10 g des in Beispiel 4 hergestellten Vinylhydrogensiloxans werden mit 0,02 g einer Lösung des Platin(0)-Divinyltetramethyldisiloxankomplexes in Decamethylcyclopentasiloxan in der Konzentration von 0,1 Gew% Platin vermischt. Nach dem Mischen härtet die Mischung innerhalb von 2 Minuten bei Raumtemperatur.

### Beispiel 13: Formulierungsbeispiel F6

Die Formulierung erfolgt wie in Beispiel 1 mit der Ausnahme, dass das Produkt aus Beispiel 5 (Vergleichsbeispiel 1) an Stelle des Produkts aus Beispiel 1 eingesetzt wurde. Nach dem Mischen härtet die Mischung selbst nach 24 Stunden nicht aus. Durch Temperierung bei 80 °C kommt es zur Härtung nach 5 Minuten.

### Beispiel 14: Formulierungsbeispiel F7

Die Formulierung erfolgt wie in Beispiel 1 mit der Ausnahme, dass das Produkt aus Beispiel 6 (Vergleichsbeispiel 2) an Stelle des Produkts aus Beispiel 1 eingesetzt wurde. Nach dem Mischen härtet die Mischung weder bei Raumtemperatur noch bei 80 °C innerhalb von 24 Stunden aus.

### Beispiel 15: Formulierungsbeispiel F8

Die Formulierung erfolgt wie in Beispiel 1 mit der Ausnahme, dass das Produkt aus Beispiel 7 (Vergleichsbeispiel 3)an Stelle des Produkts aus Beispiel 1 eingesetzt wurde. Nach dem Mischen härtet die Mischung selbst nach 24 Stunden nicht aus. Durch Temperierung bei 80 °C kommt es zur Härtung nach 10 Minuten.

Die Beispiele 8 bis 12 zeigen, dass die erfindungsgemäßen verzweigten Vinylhydrogensiloxane eine sehr schnelle Aushärtung bei Raumtemperatur ermöglichen. Insbesondere Beispiel 12 belegt die schnelle Aushärtung bei sehr niedrigen Katalysatorkonzentrationen.

### Beispiel 16: Aushärtungsbeispiel A1

In Anlehnung an DIN 53504 wurden Knochen mit vorgegebenen Abmessungen mit der Mischung aus Beispiel 8 gegossen und bei 80 °C für 10 Minuten ausgehärtet.

### Beispiel 17: Aushärtungsbeispiel A2

In Anlehnung an DIN 53504 wurden Knochen mit vorgegebenen Abmessungen mit der Mischung aus Beispiel 9 gegossen und bei 80 °C für 10 Minuten ausgehärtet.

### Beispiel 18: Aushärtungsbeispiel A3

In Anlehnung an DIN 53504 wurden Knochen mit vorgegebenen Abmessungen mit der Mischung aus Beispiel 10 gegossen und bei Raumtemperatur für 10 Minuten ausgehärtet.

### Beispiel 19: Aushärtungsbeispiel A4

In Anlehnung an DIN 53504 wurden Knochen mit vorgegebenen Abmessungen mit der Mischung aus Beispiel 11 gegossen und bei Raumtemperatur für 10 Minuten ausgehärtet.

### Beispiel 20: Bestimmung der rheologischen Eigenschaften

Angelehnt an DIN 53504 wurden die in Tabelle 1 aufgeführten rheologischen Eigenschaften der Aushärtungsbeispiele A1, A2, A3 und A4 (Beispiele 10 bis 13) mit einer Universalprüfmaschine unter Verwendung von Rollenspannzeug mit einer Zuggeschwindigkeit von 200 mm/min bestimmt.

Die Zugfestigkeit ist definiert als die maximal erreichte Zugkraft unmittelbar vor dem Einsetzen des Materialbruchs. Die Bruchdehnung ist definiert als die zu diesem Zeitpunkt maximal erreichte Längenausdehnung bezogen auf die Ursprungslänge.

**Tabelle 1: Ergebnisse der Prüfungen gemäß Beispiel 20**

| Aushärtungsbeispiel | Zugfestigkeit /MPa | Bruchdehnung / % |
|---|---|---|
| A1 | 0,45 | 7 |
| A2 | 0,42 | 27 |
| A3 | 0,2 | 29 |
| A4 | 0,34 | 54 |

### Beispiel 21: Bestimmung der thermischen Stabilität

Die Formulierungsbeispiele F1 und F5 wurden jeweils in runden Aluminiumschälchen zu einer 1,5 mm dicken Schicht ausgehärtet. Die Schälchen wurden 3 Tage bei 200°C im Trockenschrank gelagert. Es konnte keine Schrumpfung oder Rissbildung beobachtet werden. Zur Bewertung der Vergilbung wurde die Schicht vom Aluminiumuntergrund gelöst und im Vergleich auf weißem Untergrund visuell beurteilt. Das ausgehärtete Formulierungsbeispiel F5 zeigte keine Vergilbung, während beim ausgehärteten Formulierungsbeispiel F1 eine leichte Vergilbung visuell zu beobachten war.

### Beispiel 22: Bestimmung der optischen Transmission

Zur Bestimmung der optischen Transmission wurden Formulierungsbeispiel F1 und F3, jedoch mit 0,02g einer Lösung des Platin(0)-Divinyltetramethyldisiloxankomplexes in Decamethylcyclopentasiloxan in der Konzentration von 0,1 Gew.-% Platin, in UV-Küvetten überführt und bei Raumtamperatur zur Härtung gebracht. Anschließend wurde die Transmission mittels eines UV-Spektrometers der Firma Helios Zeta im Wellenlängenbereich von 200 - 900 nm gemessen. Die Transmission lag bei beiden Proben bei >92 % im Wellenbereich 300-900 nm.

## Patentansprüche

1. Polysiloxane, **dadurch gekennzeichnet, dass** sie der Formel (I)
Mₐ₁M^{H}ₐ₂M^{Vi}ₐ₃D_{b1}D^{H}_{b2}D^{Vi}_{b3}T_{c1}T^{H}_{c2}T^{Vi}_{c3}Q_{d} (I)
genügen, mit
M = [R²R¹₂SiO_{1/2}],
M^{H} = [R¹₂HSiO_{1/2}],
M^{Vi} = [R³R¹₂SiO_{1/2}],
D = [R¹₂SiO_{2/2}],
D^{H} = [R¹HSiO_{2/2}],
D^{Vi} = [R¹R³SiO_{2/2}],
T = [R⁴SiO_{3/2}],
T^{H} = [HSiO_{3/2}],
T^{Vi} = [R³SiO_{3/2}],
Q = [SiO_{4/2}],
R¹ unabhängig voneinander gleiche oder verschiedene, lineare oder verzweigte, gesättigte oder ungesättigte Kohlenwasserstoffreste, vorzugsweise aliphatische Kohlenwasserstoffreste mit 1 bis 30 Kohlenstoffatomen oder aromatische Kohlenwasserstoffreste mit 6 bis 30 Kohlenstoffatomen, bevorzugt Methyl oder Phenyl, besonders bevorzugt Methyl,
R² unabhängig voneinander gleich R¹, ein Alkoxyrest oder eine Hydroxygruppe, bevorzugt R¹, besonders bevorzugt Methyl,
R³ unabhängig voneinander gleiche oder verschiedene, lineare oder verzweigte, olefinisch ungesättigte Kohlenwasserstoffreste, bevorzugt endständige Doppelbindungen enthaltende Kohlenwasserstoffreste, besonders bevorzugt Allyl oder Vinyl, ganz besonders bevorzugt Vinyl,
R⁴ unabhängig voneinander R¹ oder gleiche oder verschiedene lineare, verzweigte und/oder zyklische, gesättigte oder ungesättigte, Heteroatome aufweisende Kohlenwasserstoffreste,
a1 = 0 bis50, vorzugsweise <10, bevorzugt 0,
a2 = 1 bis 50, vorzugsweise 2 bis 30, bevorzugt >= 4,
a3 = 1 bis 50, vorzugsweise 2 bis 30, bevorzugt >= 4,
b1 = 10 bis 5000, vorzugsweise 10 bis 1000, bevorzugt 10-500,
b2 = 0 bis 30, vorzugsweise 0 bis 12, bevorzugt 0,
b3 = 0 bis 30; vorzugsweise 0 bis 12, bevorzugt 0;
c1 = 0 bis 50, vorzugsweise 1 bis 50, bevorzugt >0;
c2 = 0 bis 50, vorzugsweise 0 bis 50, bevorzugt 0,
c3 = 0 bis 50, vorzugsweise 0 bis 50, bevorzugt 0,
d = 0 bis 50, vorzugsweise 2 bis 20, bevorzugt 4 bis 10,
mit der Maßgabe, dass die Summe c1 + c2 + c3 + d größer-gleich 1 ist.

2. Polysiloxane gemäß Anspruch 1, **dadurch gekennzeichnet, dass** d größer-gleich 1 und c1 = c2 = c3 =0.

3. Polysiloxane gemäß Anspruch 1 oder 2, **dadurch gekennzeichnet, dass** das Verhältnis der Summe aus a2, b2 und c2 zu der Summe aus a3, b3 und c3 1 zu 10 bis 10 zu 1 beträgt.

4. Polysiloxane gemäß zumindest einem der Ansprüche 1 bis 3, **dadurch gekennzeichnet, dass** das b2 = 0, b3 = 0 und b1 > c1 + c2 + c3 + d ist.

5. Verfahren zur Herstellung von verzweigten, olefinisch ungesättigte Gruppen und SiH-Gruppen aufweisenden Polysiloxanen, zeichnet sich dadurch aus, dass die Komponenten
a) ein oder mehrere Silane oder Siloxane, die ein oder mehrere SiH-Funktionen und keine olefinisch ungesättigten Kohlenwasserstoffreste aufweisen, und
b) optional ein oder mehrere SiH-Funktion-freie Siloxane, die keine olefinisch ungesättigten Kohlenwasserstoffreste aufweisen, und
c) ein oder mehrere Silane oder Siloxane, die ein oder mehrere olefinisch ungesättigten Kohlenwasserstoffresten aufweisen, und
d) ein oder mehrere Tetraalkoxysilane, und/oder
e) ein oder mehrere Trialkoxysilane,
wobei alle eingesetzten Silane der Komponenten a), c), d) und e) Alkoxygruppen, vorzugsweise Methoxy- oder Ethoxygruppen aufweisen,
unter Zugabe von Wasser und in Anwesenheit von mindestens einem Brönstedt-sauren Katalysator, welcher vorzugsweise ausgewählt ist aus den Sulfonsäuren oder den Sulfonsäuregruppen aufweisenden Verbindungen, umgesetzt werden.

6. Verfahren nach Anspruch 5, **dadurch gekennzeichnet, dass** Polysiloxane gemäß einem der Ansprüche 1 bis 4 hergestellt werden.

7. Verfahren nach Anspruch 5 oder 6, **dadurch gekennzeichnet, dass** als Brönstedt-saurer Katalysator ein bei 25 °C und 1013 mbar festes, saures Ionenaustauscherharz, das Sulfonsäuregruppen aufweist, eingesetzt wird.

8. Verwendung der Polysiloxane der Formel (I) gemäß zumindest einem der Ansprüche 1 bis 4 oder der gemäß dem erfindungsgemäßen Verfahren nach zumindest einem der Ansprüche 5 bis 7 hergestellten Polysiloxane als oder zur Herstellung von härtbaren (Einkomponenten-)Silikonmassen.

9. Silikonmasse, basierend auf Polysiloxanen der Formel (I) gemäß zumindest einem der Ansprüche 1 bis 4 oder den gemäß dem erfindungsgemäßen Verfahren nach zumindest einem der Ansprüche 5 bis 7 hergestellten Polysiloxanen.

10. Silikonmasse nach Anspruch 9, **dadurch gekennzeichnet, dass** sie weitere Bestandteile aufweist.

11. Silikonmasse nach Anspruch 10, **dadurch gekennzeichnet, dass** sie Bestandteile aufweist, die die chemischen und/oder physikalischen Eigenschaften einstellen oder beeinflussen.

12. Silikonmasse nach zumindest einem der Ansprüche 9 bis 11, **dadurch gekennzeichnet, dass** sie eine Dicht- oder Klebstoffzubereitung, eine Beschichtungsmasse, eine Verkapselungs- oder Einbettmasse ist.

13. Silikonmasse nach zumindest einem der Ansprüche 9 bis 11, **dadurch gekennzeichnet, dass** sie eine ausgehärtete Masse ist.

14. Silikonmasse nach Anspruch 13, **dadurch gekennzeichnet, dass** sie eine Folie, ein elektronisches, optisches und optoelektronisches Bauteil, ein Verbundprodukt oder ein Halbzeuge ist.
